# EUROPEAN PATENT APPLICATION

(11) **EP 4 613 807 A1**
(43) Date of publication of application: **10.09.2025**
(21) Application number: 23885983.9
(22) Date of filing: 31.08.2023
(51) Int. Cl.: C08L 23/10, C08L 23/26, C08K 7/14, C08K 3/34

(54) **POLYPROPYLENE RESIN COMPOSITION AND MOLDED PRODUCT MANUFACTURED THEREFROM**

(30) Priority: 31.10.2022 KR 20220142522
(71) Applicant: LOTTE CHEMICAL CORPORATION, Seoul 05551 (KR)
(72) Inventor: KIM, Hyeong Jun, Uiwiang-si Gyeonggi-do 16073 (KR); KANG, In Sung, Uiwiang-si Gyeonggi-do 16073 (KR); KIM, Tae Soo, Uiwiang-si Gyeonggi-do 16073 (KR); LEE, Ji Won, Uiwiang-si Gyeonggi-do 16073 (KR)
(74) Representative: Germain Maureau
(86) International application number: PCT/KR2023/012942
(87) International publication number: WO 2024/096286

(57) **Abstract**

A polypropylene resin composition of the present invention comprises: approximately 100 parts by weight of a polypropylene resin comprising approximately 20-40 wt% of recycled polypropylene resin; approximately 5-30 parts by weight of a first glass fiber having a cross-sectional diameter of approximately 5-20 µm and an average length of approximately 1-5 mm; approximately 15-40 parts by weight of a second glass fiber having a cross-sectional diameter of approximately 5-20 µm and an average length of approximately 7-15 mm; approximately 0.5-3.5 parts by weight of a maleic anhydride-modified polypropylene; and approximately 0.1-3 parts by weight of zeolite, wherein the weight ratio of the first glass fiber and the second glass fiber is approximately from 1:1 to 1:3. The polypropylene resin composition uses recycled polypropylene resin so as to be environmentally friendly, and has excellent stiffness, impact resistance, heat resistance, dimensional stability, appearance characteristics, balance of these physical properties, and the like.

## Description

### [Technical Field]

The present invention relates to a polypropylene resin composition and a molded article manufactured therefrom. More particularly, the present invention relates to a polypropylene resin composition which is environmentally friendly due to use of recycled materials and has good properties in terms of rigidity, impact resistance, heat resistance, dimensional stability, appearance, and balance therebetween, and a molded article manufactured therefrom.

### [Background Art]

Polypropylene resins can be easily manufactured into injection molded products, films, and blow-molded products due to their good chemical resistance, weather resistance, and processability and are widely used in a variety of applications such as electrical components, automobiles, and building materials.

To address environmental concerns, for example, for reduction in CO₂ emissions, there is growing demand for recycled plastics produced by recycling thermoplastic resins such as used polypropylene resins.

However, recycled plastics oxidize over a long period of time during daily use and are subjected to a thermal history once again during reprocessing, resulting in deterioration in mechanical properties, heat resistance, dimensional stability, and the like, as compared to general plastic materials (thermoplastic resin compositions).

Therefore, there is a need for a polypropylene resin composition which is environmentally friendly due to use of a recycled polypropylene resin and has good properties in terms of rigidity, impact resistance, heat resistance, dimensional stability, appearance, and balance therebetween, despite the use of the recycled polypropylene resin.

The background technique of the present invention is disclosed in U.S. Patent No. 5,660,770 and the like.

### [Disclosure]

### [Technical Problem]

It is one object of the present invention to provide a polypropylene resin composition which is environmentally friendly by adopting a recycled polypropylene resin and has good properties in terms of rigidity, impact resistance, heat resistance, dimensional stability, appearance, and balance therebetween.

It is another object of the present invention to provide a molded article manufactured from the polypropylene resin composition described above.

The above and other objects of the present invention will become apparent from the detailed description of the following embodiments.

### [Technical Solution]

1. One aspect of the present invention relates to a polypropylene resin. The polypropylene resin composition comprises: about 100 parts by weight of a polypropylene resin comprising about 20 wt% to about 40 wt% of a recycled polypropylene resin; about 5 parts by weight to about 30 parts by weight of a first glass fiber (SGF) having a cross-sectional diameter of about 5 µm to about 20 µm and an average length of about 1 mm to about 5 mm; about 15 parts by weight to about 40 parts by weight of a second glass fiber (LGF) having a cross-sectional diameter of about 5 µm to about 20 µm and an average length of about 7 mm to about 15 mm; about 0.5 parts by weight to about 3.5 parts by weight of a maleic anhydride-modified polypropylene; and about 0.1 parts by weight to about 3 parts by weight of zeolite, wherein a weight ratio of the first glass fiber to the second glass fiber ranges from about 1:1 to about 1:3.
2. In embodiment 1, the polypropylene resin may comprise at least one of a homopolypropylene resin, a block polypropylene resin, and a random polypropylene resin.
3. In embodiment 1 or 2, the recycled polypropylene resin may have a melt-flow Index (MI) of about 10 g/10 min to about 100 g/10 min, as measured at a temperature of 230°C under a load of 2.16 kg in accordance with ASTM D1238.
4. In embodiments 1 to 3, a polypropylene resin other than the recycled polypropylene resin may have a melt-flow index of about 4 g/10 min to about 80 g/10 min, as measured at a temperature of 230°C under a load of 2.16 kg in accordance with ASTM D1238.
5. In embodiments 1 to 4, the maleic anhydride-modified polypropylene may have a degree of graft of maleic anhydride in the range of about 0.5 wt% to about 3.0 wt%.
6. In embodiments 1 to 5, the polypropylene resin composition may have a tensile strength of about 1,000 kgf/cm² to about 1,500 kgf/cm², as measured on a 3.2 mm thick specimen at a crosshead speed of 50 mm/min in accordance with ASTM D638.
7. In embodiments 1 to 6, the polypropylene resin composition may have a tensile modulus of 50,000 kgf/cm² to about 90,000 kgf/cm², as measured on a 3.2 mm thick specimen at a crosshead speed of 50 mm/min in accordance with ASTM D638.
8. In embodiments 1 to 7, the polypropylene resin composition may have a flexural strength of about 1,000 kgf/cm² to about 1,500 kgf/cm², as measured on a 6.4 mm thick specimen at a crosshead speed of 2.8 mm/min in accordance with ASTM D790.
9. In embodiments 1 to 8, the polypropylene resin composition may have a flexural modulus of about 45,000 kgf/cm² to about 70,000 kgf/cm², as measured on a 6.4 mm thick specimen at a crosshead speed of 2.8 mm/min in accordance with ASTM D790.
10. In embodiments 1 to 9, the polypropylene resin composition may have a notched Izod impact strength of about 10 kgf·cm/cm to about 20 kgf·cm/cm, as measured on a 1/8" thick specimen in accordance with ASTM D256.
11. In embodiments 1 to 10, the polypropylene resin composition may have a heat deflection temperature (HDT) of about 145°C to about 165°C, as measured under a load of 18.56 kgf/cm² at a heating rate of 120°C/hr in accordance with ASTM D648.
12. In embodiments 1 to 11, the polypropylene resin composition may have a molding shrinkage in the machine direction (MD) of about 0.2% to about 0.5% and a molding shrinkage in the transverse direction (TD) of about 0.2% to about 0.5%, as measured on a circular specimen having a thickness of 3.2 mm and a diameter of 100 mm in accordance with ASTM D955.
13. Another aspect of the present invention relates to a molded product. The molded product is manufactured from the polypropylene resin composition according to any one of embodiments 1 to 12.

### [Advantageous Effects]

The present invention provides a polypropylene resin composition which is environmentally friendly due to use of a recycled polypropylene resin and has good properties in terms of rigidity, impact resistance, heat resistance, dimensional stability, appearance, and balance therebetween, and a molded product manufactured therefrom.

### [Best Mode]

Hereinafter, embodiments of the present invention will be described in detail.

A polypropylene resin composition according to the present invention comprises: (A) a polypropylene resin; (B) a first glass fiber; (C) a second glass fiber; (D) a maleic anhydride-modified polypropylene; and (E) zeolite.

As used herein to represent a specific numerical range, "a to b" is defined as "≥a and ≤b".

### (A) Polypropylene resin

The polypropylene resin according to one embodiment of the present invention is environmentally friendly by adopting a recycled polypropylene resin, serves to improve rigidity, impact resistance, heat resistance, dimensional stability, appearance, and balance therebetween of the polypropylene resin composition, when used together with the first glass fiber and the second glass fiber each having a length within a specific range, the maleic anhydride-modified polypropylene, and the zeolite, and may include a mixture of a recycled polypropylene resin (recycled material) and a polypropylene resin (virgin material) used in typical polypropylene resin compositions.

In some embodiments, the recycled polypropylene resin may be present in an amount of about 20 wt% to about 40 wt%, for example, about 22 wt% to about 35 wt%, based on the total weight of the polypropylene resin. If the content of the recycled polypropylene resin is less than about 20 wt% based on the total weight of the polypropylene resin, the polypropylene resin composition can fail to meet environmental friendliness requirements of the present invention, whereas, if the content of the recycled polypropylene resin exceeds about 40 wt% based on the total weight of the polypropylene resin, the polypropylene resin composition can have poor properties in terms of rigidity, appearance, and the like.

In some embodiments, the polypropylene resin (recycled material and virgin material) may comprise at least one of a homopolypropylene resin, a block polypropylene resin, and a random polypropylene resin. Here, the block polypropylene resin may include a block polypropylene resin comprising a homopolypropylene block and an ethylene-propylene copolymer block and/or a homopolyethylene block, and the random polypropylene resin may include a propylene-ethylene random copolymer.

In some embodiments, the recycled polypropylene resin (recycled material) may have a melt-flow index (MI) of about 10 g/10 min to about 100 g/10 min, for example, about 20 g/10 min to about 80 g/10 min, as measured at a temperature of 230°C under a load of 2.16 kg in accordance with ASTM D1238. Within this range, the polypropylene resin composition can have good properties in terms of rigidity, impact resistance, heat resistance, and the like.

In some embodiments, a polypropylene resin (virgin material) other than the recycled polypropylene resin may have a melt-flow index of about 4 g/10 min to about 80 g/10 min, for example, about 4 g/10 min to about 50 g/10 min, as measured at a temperature of 230°C under a load of 2.16 kg in accordance with ASTM D1238. Within this range, the polypropylene resin composition can have good properties in terms of rigidity, impact resistance, heat resistance, and the like.

### (B) First glass fiber

The first glass fiber according to one embodiment of the present invention serves to improve rigidity, impact resistance, heat resistance, dimensional stability, appearance, and balance therebetween of the polypropylene resin composition despite the use of the recycled polypropylene resin, when applied to the polypropylene resin together with the second glass fiber having a length within a specific range, the maleic anhydride-modified polypropylene, and the zeolite, and may include short glass fibers having a cross-sectional diameter of about 5 µm to about 20 µm and an average length of about 1 mm to about 5 mm.

In some embodiments, the first glass fiber may have a cross-sectional diameter of about 5 µm to about 20 µm, for example, about 7 µm to about 15 µm, as measured using a scanning electron microscope (SEM), and an average length of about 1 mm to about 5 mm, for example, about 2 to about 5 mm, as measured and calculated using an optical microscope. If the cross-sectional diameter and the average length of the first glass fiber are outside these ranges, the polypropylene resin composition can have poor properties in terms of rigidity, impact resistance, heat resistance, dimensional stability, and the like.

In some embodiments, the first glass fiber may be provided in fiber form and may have various shapes in cross-section, such as a circular shape, an oval shape, and a rectangular shape. For example, using fibrous glass fibers with circular and/or rectangular cross-sections as the first glass fiber may be advantageous in terms of mechanical properties.

In some embodiments, the first glass fiber may be treated with a typical surface treatment agent. The surface treatment agent may include silane compounds, urethane compounds, and epoxy compounds, and the like, without being limited thereto.

In some embodiments, the first glass fiber may be present in an amount of about 5 parts by weight to about 30 parts by weight, for example, about 10 parts by weight to about 25 parts by weight, relative to about 100 parts by weight of the polypropylene resin. If the content of the first glass fiber is less than about 5 parts by weight relative to about 100 parts by weight of the polypropylene resin, the polypropylene resin composition can have poor properties in terms of rigidity and the like, whereas, if the content of the first glass fiber exceeds about 30 parts by weight relative to about 100 parts by weight of the polypropylene resin, the polypropylene resin composition can have poor properties in terms of appearance and the like.

### (C) Second glass fiber

The second glass fiber according to one embodiment of the present invention serves to improve rigidity, impact resistance, heat resistance, dimensional stability, appearance, and balance therebetween of the polypropylene resin composition despite the use of the recycled polypropylene resin, when applied to the polypropylene resin together with the first glass fiber, the maleic anhydride-modified polypropylene, and the zeolite, and may include long glass fibers having a cross-sectional diameter of about 5 µm to about 20 µm and an average length of about 7 mm to about 15 mm.

In some embodiments, the second glass fiber may have a cross-sectional diameter of about 5 µm to about 20 µm, for example, about 7 µm to about 15 µm, as measured using a scanning electron microscope (SEM), and an average length of about 7 mm to about 15 mm, for example, about 8 to about 13 mm, as measured and calculated using an optical microscope. If the cross-sectional diameter and the average length of the second glass fiber are outside these ranges, the polypropylene resin composition can have poor properties in terms of rigidity, impact resistance, heat resistance, dimensional stability, and the like.

In some embodiments, the second glass fiber may be provided in fiber form and may have various shapes in cross-section, such as a circular shape, an oval shape, and a rectangular shape. For example, using fibrous glass fibers with circular and/or rectangular cross-sections as the second glass fiber may be advantageous in terms of mechanical properties.

In some embodiments, the second glass fiber may be treated with a typical surface treatment agent. The surface treatment agent may include silane compounds, urethane compounds, epoxy compounds, and the like, without being limited thereto.

In some embodiments, the second glass fiber may be present in an amount of about 15 parts by weight to about 40 parts by weight, for example, about 20 parts by weight to about 35 parts by weight, relative to about 100 parts by weight of the polypropylene resin. If the content of the second glass fiber is less than about 15 parts by weight relative to about 100 parts by weight of the polypropylene resin, the polypropylene resin composition can have poor properties in terms of rigidity and the like, whereas, if the content of the second glass fiber exceeds about 40 parts by weight relative to about 100 parts by weight of the polypropylene resin, the polypropylene resin composition can have poor properties in terms of rigidity, appearance and the like.

In some embodiments, the first glass fiber and the second glass fiber may be present in a weight ratio of about 1:1 to about 1:3 (first glass fiber:second glass fiber), for example, about 1:1.05 to about 1:2.75. Within this range, the polypropylene resin composition (and a molded product manufactured therefrom) can have further improved properties in terms of rigidity, impact resistance, dimensional stability, and the like.

### (D) Maleic anhydride-modified polypropylene

The maleic anhydride-modified polypropylene according to one embodiment of the present invention serves to improve rigidity, impact resistance, heat resistance, dimensional stability, appearance, and balance therebetween of the polypropylene resin composition despite the use of the recycled polypropylene resin, when applied to the polypropylene resin together with the first glass fiber, the second glass fiber, and the zeolite, and may include a maleic anhydride-modified polypropylene obtained by polymerizing (grafting) maleic anhydride with (to) polypropylene.

In some embodiments, the maleic anhydride-modified polypropylene may have a degree of graft of maleic anhydride in the range of about 0.5 wt% to about 3.0 wt%, for example, about 0.6 wt% to about 2.0 wt%. Within this range, the polypropylene resin composition can have good properties in terms of rigidity, impact resistance, and the like.

In some embodiments, the maleic anhydride-modified polypropylene may have a melt-flow index of about 50 g/10 min to about 200 g/10 min, for example, about 70 g/10 min to about 150 g/10 min, as measured at a temperature of 230°C under a load of 2.16 kg in accordance with ASTM D1238. Within this range, the polypropylene resin composition can have good properties in terms of rigidity, impact resistance, impregnability, and the like.

In some embodiments, the maleic anhydride-modified polypropylene may be present in an amount of about 0.5 parts by weight to about 3.5 parts by weight, for example, about 1 part by weight to about 3 parts by weight, relative to about 100 parts by weight of the polypropylene resin. If the content of the maleic anhydride-modified polypropylene is less than about 0.5 parts by weight relative to about 100 parts by weight of the polypropylene resin, the polypropylene resin composition can have poor properties in terms of rigidity, impact resistance, and the like, whereas, if the content of the maleic anhydride-modified polypropylene exceeds about 3.5 parts by weight relative to about 100 parts by weight of the polypropylene resin, the polypropylene resin composition can have properties in terms of appearance and the like.

### (E) Zeolite

The zeolite according to one embodiment of the present invention serves to improve rigidity, impact resistance, heat resistance, dimensional stability, appearance, and balance therebetween of the polypropylene resin composition despite the use of the recycled polypropylene resin, when applied to the polypropylene resin together with the first glass fiber, the second glass fiber, and the maleic anhydride-modified polypropylene, and may include zeolite used in typical thermoplastic resin compositions.

In some embodiments, the zeolite may comprise porous particles having a pore size of about 0.1 nm to about 0.8 nm, for example, about 0.3 nm to about 0.6 nm, and an average particle size of about 0.5 µm to about 6 µm, for example, about 1 µm to about 5 µm. Within these ranges, the polypropylene resin composition can have good properties in terms of rigidity, impact resistance, and the like. Here, the average particle size of the zeolite is defined as a particle size at a cumulative value of 50% obtained from a particle size distribution measured by a laser diffraction/scattering method.

In some embodiments, the zeolite may be present in an amount of about 0.1 parts by weight to about 3 parts by weight, for example, about 0.5 parts by weight to about 2.5 parts by weight, relative to about 100 parts by weight of the polypropylene resin. If the content of the zeolite is less than about 0.1 parts by weight relative to about 100 parts by weight of the polypropylene resin, the polypropylene resin composition can have poor properties in terms of rigidity, appearance, and the like, whereas, if the content of the zeolite exceeds about 3 parts by weight relative to about 100 parts by weight of the polypropylene resin, the polypropylene resin composition can have poor properties in terms of appearance and the like.

The polypropylene resin composition according to one embodiment of the present invention may further comprise additives used in typical polypropylene resin compositions. The additives may include, for example, impact modifiers, flame retardants, anti-dripping agents, antioxidants, surfactants, lubricants, release agents, nucleating agents, UV stabilizers, pigments, dyes, and mixtures thereof, without being limited thereto.

In some embodiments, the additives may be optionally present in an amount of about 0.001 parts by weight to about 40 parts by weight, for example, about 0.1 parts by weight to about 10 parts by weight, relative to about 100 parts by weight of the polypropylene resin.

The polypropylene resin composition according to one embodiment of the present invention may be prepared in pellet form by mixing the aforementioned components, followed by melt extrusion in a typical twin-screw extruder at a temperature of about 180°C to about 320°C, for example, about 240°C to about 300°C.

In some embodiments, the polypropylene resin composition may have a tensile strength of about 1,000 kgf/cm² to about 1,500 kgf/cm², for example, about 1,040 kgf/cm² to about 1,400 kgf/cm², as measured on a 3.2 mm thick specimen in accordance with ASTM D638.

In some embodiments, the polypropylene resin composition may have a tensile modulus of 50,000 kgf/cm² to about 90,000 kgf/cm², for example, about 55,000 kgf/cm² to about 80,000 kgf/cm², as measured on a 3.2 mm thick specimen in accordance with ASTM D638.

In some embodiments, the polypropylene resin composition may have a flexural strength of about 1,000 kgf/cm² to about 1,500 kgf/cm², for example, about 1,050 kgf/cm² to about 1,480 kgf/cm², as measured on a 6.4 mm thick specimen at a crosshead speed of 2.8 mm/min in accordance with ASTM D790.

In some embodiments, the polypropylene resin composition may have a flexural modulus of about 45,000 kgf/cm² to about 70,000 kgf/cm², for example, about 50,000 kgf/cm² to about 65,000 kgf/cm², as measured on a 6.4 mm thick specimen at a crosshead speed of 2.8 mm/min in accordance with ASTM D790.

In some embodiments, the polypropylene resin composition may have a notched Izod impact strength of about 10 kgf·cm/cm to about 20 kgf·cm/cm, for example, about 10.1 kgf·cm/cm to about 18 kgf·cm/cm, as measured on a 1/8" thick specimen in accordance with ASTM D256.

In some embodiments, the polypropylene resin composition may have a heat deflection temperature (HDT) of about 145°C to about 165°C, for example, about 150°C to about 160°C, as measured under a load of 18.56 kgf/cm² at a heating rate of 120°C/hr in accordance with ASTM D648.

In some embodiments, the polypropylene resin composition may have a molding shrinkage in the machine direction (MD) of about 0.2% to about 0.5%, for example, about 0.31% to about 0.45%, and a molding shrinkage in the transverse direction (TD) of about 0.2% to about 0.5%, for example, about 0.35% to about 0.47%, as measured on a specimen having a thickness of 3.2 mm and a diameter of 100 mm in accordance with ASTM D955.

A molded product according to the present invention is manufactured from the polypropylene resin composition described above. The polypropylene resin composition may be prepared in pellet form. The prepared pellets may be manufactured into various molded products (articles) by various molding methods, such as injection molding, extrusion, vacuum molding, casting, and the like. These molding methods are well known to a person having ordinary knowledge in the art to which the present invention pertains.

The molded article according to the present invention is environmentally friendly due to use of a recycled polypropylene resin and has good properties in terms of rigidity, impact resistance, heat resistance, dimensional stability, appearance, and balance therebetween. Accordingly, the molded article is useful for applications such as electrical/electronic products, automobile parts, and the like, especially for washing machine drums/tubs, dishwashers, and the like.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows:

### (A) Polypropylene resin

(A1) A recycled polypropylene resin (melt-flow index: 30 g/10 min, product name: R170LC, manufacturer: Woori Plastics) was used.

(A2) A polypropylene resin (melt-flow index: 10 g/10 min, product name: J-150, manufacturer: Lotte Chemical) was used.

### (B) First glass fiber

Glass fibers (cross-sectional diameter: 14 µm, length: 4 mm, product name: 147A-PP, manufacturer: Owens Corning) were used.

### (C) Second glass fiber

Glass fibers (cross-sectional diameter: 13 µm, length: 9 mm, product name: CS331, manufacturer: KCC) were used.

### (D) Maleic anhydride-modified polypropylene

A maleic anhydride-modified polypropylene (degree of graft of maleic anhydride: 1.0 wt%, product name: CM1120H, manufacturer: Lotte Chemical) was used.

### (E) Zeolite

Zeolite (average particle size: 2 µm to 4 µm, pore size: 0.3 nm to 0.6 nm, product name: Zeolite 4A, manufacturer: HUIYING Chemical Industry Co., Ltd.) was used.

### Examples 1 to 12 and Comparative Examples 1 to 11

The aforementioned components were mixed in amounts as listed in Tables 1, 2, 3, and 4, followed by extrusion at 250°C, thereby preparing a polypropylene resin composition in pellet form. Here, extrusion was performed using a twin-screw extruder (L/D: 40, diameter: 75 mm). The prepared pellets were dried at 80°C for 2 hours or more and then subjected to injection molding using a 110-ton injection molding machine (molding temperature: 230°C, mold temperature: 40°C), thereby preparing a specimen. The prepared specimen was evaluated as to the following properties. Results are shown in Tables 1, 2, 3, and 4.

### Property evaluation

(1) Tensile strength (unit: kgf/cm²): Tensile strength was measured on a 3.2 mm thick specimen at a crosshead speed of 50 mm/min in accordance with ASTM D638.
(2) Tensile modulus (unit: kgf/cm²): Tensile modulus was measured on a 3.2 mm thick specimen at a crosshead speed of 50 mm/min in accordance with ASTM D638.
(3) Flexural strength (unit: kgf/cm²): Flexural strength was measured on a 6.4 mm thick specimen at a crosshead speed of 2.8 mm/min in accordance with ASTM D790.
(4) Flexural modulus (unit: kgf/cm²): Flexural modulus was measured on a 6.4 mm thick specimen at a crosshead speed of 2.8 mm/min in accordance with ASTM D790.
(5) Notched Izod Impact strength (unit: kgf·cm/cm): Notched Izod impact strength was measured on 1/8" thick specimen in accordance with ASTM D256.
(6) Heat deflection temperature (unit: °C): Heat deflection temperature was measured under a load of 18.56 kgf/cm² at a heating rate of 120°C/hr in accordance with ASTM D648.
(7) Molding shrinkage (unit: %): Molding shrinkage was measured on a circular specimen with a thickness of 3.2 mm and a diameter of 100 mm in the machine direction (MD) and the transverse direction (TD) thereof in accordance with ASTM D955.
(8) Average length of glass fibers after molding (unit: mm): After the injection molded specimen was melted by heat treatment at 600°C for 4 h, lengths of 500 remaining glass fibers were measured using an optical microscope, followed by averaging the obtained values.
(9) Appearance: The number of fiber agglomerations with a visible length of 0.3 cm or more was determined on a surface of an injection molded specimen having a size of 400 mm×250 mm×2 mm. (∘: 30 or less, △: 31 to 50, ×: 50 or more)

**[Table 1]**

| | | Example | | | | | |
|---|---|---|---|---|---|---|---|
| | | 1 | 2 | 3 | 4 | 5 | 6 |
| (A) (wt%) | (A1) | 26.4 | 26.8 | 22 | 35 | 26.6 | 26.6 |
| | (A2) | 73.6 | 73.2 | 78 | 65 | 73.4 | 73.4 |
| (B) (parts by weight) | | 17.6 | 17.9 | 17.5 | 17.5 | 10 | 25 |
| (C) (parts by weight) | | 26.4 | 26.9 | 26.3 | 26.3 | 26.3 | 26.3 |
| (D) (parts by weight) | | 1.8 | 2.7 | 2.3 | 2.3 | 2.3 | 2.3 |
| (E) (parts by weight) | | 0.9 | 1.8 | 1.4 | 1.4 | 1.4 | 1.4 |
| Tensile strength (kgf/cm²) | | 1,210 | 1,215 | 1,230 | 1,120 | 1,040 | 1,265 |
| Tensile modulus (kgf/cm²) | | 68,660 | 67,860 | 68,760 | 68,640 | 65,460 | 70,560 |
| Flexural strength (kgf/cm²) | | 1,347 | 1,394 | 1,401 | 1,305 | 1,204 | 1,454 |
| Flexural modulus (kgf/cm²) | | 60,238 | 60,809 | 60,605 | 60,104 | 55,105 | 63,239 |
| Notched Izod Impact strength (kgf·cm/cm) | | 13.85 | 13.91 | 14.12 | 13.45 | 11.54 | 14.12 |
| Heat deflection temperature (°C) | | 158.12 | 158.63 | 158.34 | 155.64 | 157.12 | 158.45 |
| Molding shrinkage in MD (%) | | 0.341 | 0.337 | 0.339 | 0.335 | 0.354 | 0.321 |
| Molding shrinkage in TD (%) | | 0.395 | 0.394 | 0.394 | 0.393 | 0.413 | 0.374 |
| Average length of glass fibers after molding (mm) | | 1.68 | 1.69 | 1.73 | 1.45 | 1.91 | 1.52 |
| Appearance | | ○ | ○ | ○ | ○ | ○ | ○ |

**Table 2**

| | | Example | | | | | |
|---|---|---|---|---|---|---|---|
| | | 7 | 8 | 9 | 10 | 11 | 12 |
| (A) (wt%) | (A1) | 26.6 | 26.6 | 26.6 | 26.6 | 26.6 | 26.6 |
| | (A2) | 73.4 | 73.4 | 73.4 | 73.4 | 73.4 | 73.4 |
| (B) (parts by weight) | | 17.5 | 17.5 | 17.5 | 17.5 | 17.5 | 17.5 |
| (C) (parts by weight) | | 20 | 35 | 26.3 | 26.3 | 26.3 | 26.3 |
| (D) (parts by weight) | | 2.3 | 2.3 | 1 | 3 | 2.3 | 2.3 |
| (E) (parts by weight) | | 1.4 | 1.4 | 1.4 | 1.4 | 0.5 | 2.5 |
| Tensile strength (kgf/cm²) | | 1,050 | 1,295 | 1,150 | 1,225 | 1,090 | 1,220 |
| Tensile modulus (kgf/cm²) | | 65,740 | 70,480 | 68,540 | 68,460 | 67,890 | 68,740 |
| Flexural strength (kgf/cm²) | | 1,195 | 1,465 | 1,295 | 1,389 | 1,225 | 1,335 |
| Flexural modulus (kgf/cm²) | | 55,023 | 63,160 | 59,870 | 60,450 | 60,125 | 60,545 |
| Notched Izod Impact strength (kgf·cm/cm) | | 10.12 | 16.45 | 12.84 | 13.87 | 12.98 | 14.04 |
| Heat deflection temperature (°C) | | 157.1 | 158.95 | 158.01 | 158.67 | 158.15 | 158.98 |
| Molding shrinkage in MD (%) | | 0.355 | 0.315 | 0.342 | 0.339 | 0.34 | 0.339 |
| Molding shrinkage in TD (%) | | 0.412 | 0.369 | 0.394 | 0.395 | 0.396 | 0.397 |
| Average length of glass fibers after molding (mm) | | 1.56 | 1.81 | 1.68 | 1.69 | 1.69 | 1.68 |
| Appearance | | ○ | ○ | ○ | ○ | ○ | ○ |

**[Table 3]**

| | | Comparative Example | | | | |
|---|---|---|---|---|---|---|
| | | 1 | 2 | 3 | 4 | 5 |
| (A) (wt%) | (A1) | 45 | 26.6 | 26.6 | 26.6 | 26.6 |
| | (A2) | 55 | 73.4 | 73.4 | 73.4 | 73.4 |
| (B) (parts by weight) | | 17.5 | 1 | 35 | 17.5 | 17.5 |
| (C) (parts by weight) | | 26.3 | 26.3 | 26.3 | 10 | 45 |
| (D) (parts by weight) | | 2.3 | 2.3 | 2.3 | 2.3 | 2.3 |
| (E) (parts by weight) | | 1.4 | 1.4 | 1.4 | 1.4 | 1.4 |
| Tensile strength (kgf/cm²) | | 980 | 850 | 1,315 | 800 | 1,350 |
| Tensile modulus (kgf/cm²) | | 67,540 | 45,200 | 72,650 | 45,100 | 72,900 |
| Flexural strength (kgf/cm²) | | 1,190 | 950 | 1,505 | 900 | 1,550 |
| Flexural modulus (kgf/cm²) | | 60,140 | 40,400 | 65,240 | 40,300 | 65,340 |
| Notched Izod Impact strength (kgf·cm/cm) | | 12.54 | 11.45 | 15.14 | 10.45 | 16.85 |
| Heat deflection temperature (°C) | | 154.64 | 155.64 | 159.45 | 154.95 | 159.67 |
| Molding shrinkage in MD (%) | | 0.341 | 0.377 | 0.305 | 0.375 | 0.304 |
| Molding shrinkage in TD (%) | | 0.398 | 0.436 | 0.355 | 0.435 | 0.353 |
| Average length of glass fibers after molding (mm) | | 1.35 | 2.33 | 1.37 | 1.25 | 1.91 |
| Appearance | | △ | ○ | × | ○ | × |

**[Table 4]**

| | | Comparative Example | | | | | |
|---|---|---|---|---|---|---|---|
| | | 6 | 7 | 8 | 9 | 10 | 11 |
| (A) (wt%) | (A1) | 26.6 | 26.6 | 26.6 | 26.6 | 26.6 | 26.6 |
| | (A2) | 73.4 | 73.4 | 73.4 | 73.4 | 73.4 | 73.4 |
| (B) (parts by weight) | | 17.5 | 17.5 | 17.5 | 17.5 | 30 | 5 |
| (C) (parts by weight) | | 26.3 | 26.3 | 26.3 | 26.3 | 15 | 40 |
| (D) (parts by weight) | | 0.1 | 4 | 2.3 | 2.3 | 2.3 | 2.3 |
| (E) (parts by weight) | | 1.4 | 1.4 | 0.05 | 3.5 | 1.4 | 1.4 |
| Tensile strength (kgf/cm²) | | 960 | 1,305 | 980 | 1,305 | 1,110 | 1,320 |
| Tensile modulus (kgf/cm²) | | 67,700 | 68,540 | 69,200 | 69,050 | 68,950 | 68,750 |
| Flexural strength (kgf/cm²) | | 1,120 | 1,385 | 1,155 | 1,340 | 1,205 | 1,410 |
| Flexural modulus (kgf/cm²) | | 58,970 | 60,600 | 59,610 | 60,105 | 59,140 | 60,360 |
| Notched Izod Impact strength (kgf·cm/cm) | | 9.45 | 14.15 | 13.45 | 14.45 | 9.54 | 15.45 |
| Heat deflection temperature (°C) | | 158.45 | 158.75 | 158.45 | 158.95 | 158.64 | 158.97 |
| Molding shrinkage in MD (%) | | 0.341 | 0.342 | 0.344 | 0.341 | 0.352 | 0.335 |
| Molding shrinkage in TD (%) | | 0.395 | 0.396 | 0.396 | 0.395 | 0.405 | 0.385 |
| Average length of glass fibers after molding (mm) | | 1.68 | 1.69 | 1.65 | 1.69 | 1.21 | 2.23 |
| Appearance | | × | × | × | × | △ | × |

From the above results, it could be seen that the polypropylene resin compositions according to the present invention were environmentally friendly by adopting the recycled polypropylene resin and had good properties in terms of rigidity (tensile strength, tensile modulus, flexural strength, flexural modulus), impact resistance (notched Izod impact strength), heat resistance (heat deflection temperature), dimensional stability (molding shrinkage in MD and TD), and balance therebetween.

Conversely, it could be seen that a polypropylene resin composition prepared using an insufficient amount of the recycled polypropylene resin could fail to meet environmental friendliness requirements of the present invention, and the polypropylene resin composition of Comparative Example 1 prepared using an excess of the recycled polypropylene resin suffered from deterioration in rigidity, appearance, and the like. It could be seen that the polypropylene resin composition of Comparative Example 2 prepared using an insufficient amount of the first glass fiber suffered from deterioration in rigidity and the like, the polypropylene resin composition of Comparative Example 3 prepared using an excess of the first glass fiber suffered from deterioration in appearance and the like, the polypropylene resin composition of Comparative Example 4 prepared using an insufficient amount of the second glass fiber suffered from deterioration in rigidity and the like, and the polypropylene resin composition of Comparative Example 5 prepared using an excess of the second glass fiber suffered from deterioration in rigidity, appearance, and the like. It could be seen that the polypropylene resin composition of Comparative Example 6 prepared using an insufficient amount of the maleic anhydride-modified polypropylene suffered from deterioration in rigidity, impact resistance, and the like, the polypropylene resin composition of Comparative Example 7 prepared using an excess of the maleic anhydride-modified polypropylene suffered from deterioration in appearance and the like, the polypropylene resin composition of Comparative Example 8 prepared using an insufficient amount of the zeolite suffered from deterioration in rigidity, appearance, and the like, and the polypropylene resin composition of Comparative Example 8 prepared using an excess of the zeolite suffered from deterioration in appearance and the like. In addition, it could be seen that, despite the contents of the first glass fiber and the second glass fiber being within the ranges according to the present invention, the polypropylene resin composition of Comparative Example 10, in which the weight ratio of the first glass fiber to the second glass fiber was 1:0.5 (that is, was less than the range according to the present invention), suffered from deterioration in impact resistance, appearance, and the like, and the polypropylene resin composition of Comparative Example 10, in which the weight ratio of the first glass fiber to the second glass fiber was 1:4 (that is, exceeded the range according to the present invention), suffered from deterioration in appearance and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A polypropylene resin composition comprising:
about 100 parts by weight of a polypropylene resin comprising about 20 wt% to about 40 wt% of a recycled polypropylene resin;
about 5 parts by weight to about 30 parts by weight of a first glass fiber having a cross-sectional diameter of about 5 µm to about 20 µm and an average length of about 1 mm to about 5 mm;
about 15 parts by weight to about 40 parts by weight of a second glass fiber having a cross-sectional diameter of about 5 µm to about 20 µm and an average length of about 7 mm to about 15 mm;
about 0.5 parts by weight to about 3.5 parts by weight of a maleic anhydride-modified polypropylene; and
about 0.1 parts by weight to about 3 parts by weight of zeolite,
wherein a weight ratio of the first glass fiber to the second glass fiber ranges from about 1:1 to about 1:3.

2. The polypropylene resin composition according to claim 1, wherein the polypropylene resin comprises at least one of a homopolypropylene resin, a block polypropylene resin, and a random polypropylene resin.

3. The polypropylene resin composition according to claim 1 or 2, wherein the recycled polypropylene resin has a melt-flow Index (MI) of about 10 g/10 min to about 100 g/10 min, as measured at a temperature of 230°C under a load of 2.16 kg in accordance with ASTM D1238.

4. The polypropylene resin composition according to any one of claims 1 to 3, wherein a polypropylene resin other than the recycled polypropylene resin has a melt-flow index of about 4 g/10 min to about 80 g/10 min, as measured at a temperature of 230°C under a load of 2.16 kg in accordance with ASTM D1238.

5. The polypropylene resin composition according to any one of claims 1 to 4, wherein the maleic anhydride-modified polypropylene has a degree of graft of maleic anhydride in the range of about 0.5 wt% to about 3.0 wt%.

6. The polypropylene resin composition according to any one of claims 1 to 5, wherein the polypropylene resin composition has a tensile strength of about 1,000 kgf/cm² to about 1,500 kgf/cm², as measured on a 3.2 mm thick specimen at a crosshead speed of 50 mm/min in accordance with ASTM D638.

7. The polypropylene resin composition according to any one of claims 1 to 6, wherein the polypropylene resin composition has a tensile modulus of 50,000 kgf/cm² to about 90,000 kgf/cm², as measured on a 3.2 mm thick specimen at a crosshead speed of 50 mm/min in accordance with ASTM D638.

8. The polypropylene resin composition according to any one of claims 1 to 7, wherein the polypropylene resin composition has a flexural strength of about 1,000 kgf/cm² to about 1,500 kgf/cm², as measured on a 6.4 mm thick specimen at a crosshead speed of 2.8 mm/min in accordance with ASTM D790.

9. The polypropylene resin composition according to any one of claims 1 to 8, wherein the polypropylene resin composition has a flexural modulus of about 45,000 kgf/cm² to about 70,000 kgf/cm², as measured on a 6.4 mm thick specimen at a crosshead speed of 2.8 mm/min in accordance with ASTM D790.

10. The polypropylene resin composition according to any one of claims 1 to 9, wherein the polypropylene resin composition has a notched Izod impact strength of about 10 kgf cm/cm to about 20 kgf·cm/cm, as measured on a 1/8" thick specimen in accordance with ASTM D256.

11. The polypropylene resin composition according to any one of claims 1 to 10, wherein the polypropylene resin composition has a heat deflection temperature (HDT) of about 145°C to about 165°C, as measured under a load of 18.56 kgf/cm² at a heating rate of 120°C/hr in accordance with ASTM D648.

12. The polypropylene resin composition according to any one of claims 1 to 11, wherein the polypropylene resin composition has a molding shrinkage in the machine direction (MD) of about 0.2% to about 0.5% and a molding shrinkage in the transverse direction (TD) of about 0.2% to about 0.5%, as measured on a specimen having a thickness of 3.2 mm and a diameter of 100 mm in accordance with ASTM D955.

13. A molded product manufactured from the polypropylene resin composition according to any one of claims 1 to 12.
